(19) Europäisches Patentamt / European Patent Office / Office européen des brevets

(11) **EP 4 397 796 A1**

(12) **EUROPEAN PATENT APPLICATION**
published in accordance with Art. 153(4) EPC

(43) Date of publication:
**10.07.2024 Bulletin 2024/28**

(21) Application number: **22864648.5**

(22) Date of filing: **31.08.2022**

(51) International Patent Classification (IPC):
**D02G 1/08** $^{(2006.01)}$    **C04B 41/85** $^{(2006.01)}$
**C04B 35/117** $^{(2006.01)}$

(52) Cooperative Patent Classification (CPC):
**C04B 35/117; C04B 41/85; D02G 1/08**

(86) International application number:
**PCT/JP2022/032838**

(87) International publication number:
**WO 2023/033066 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 JP 2021141948**

(71) Applicant: **Kyocera Corporation**
**Kyoto-shi Kyoto 612-8501 (JP)**

(72) Inventor: **KAWABATA, Hirotaka**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **SLIDING MEMBER, DISK FOR FALSE TWISTING MACHINES, AND METHOD FOR PRODUCING SLIDING MEMBER**

(57) A sliding member is made of ceramics containing aluminum oxide as a main component and fluorine, the sliding member including: a surface portion having a sliding contact portion; and an inside surrounded by the surface portion, in which a concentration of fluorine on a sliding contact surface of the sliding contact portion is higher than a concentration of fluorine in the inside as obtained from element mapping by an energy dispersive X-ray spectrometer. The disk for false twisting machines includes a sliding member.

FIG. 1

**Description**

TECHNICAL FIELD

The present disclosure relates to a sliding member, a disk for false twisting machines using the sliding member, and a method for producing a sliding member.

BACKGROUND OF INVENTION

Because known aluminum oxide sintered bodies have high abrasion resistance, they have been used as sliding members for, for example, seals, slide rings, pumps, pistons, disk for false twisting machines, and the like.

When the sliding member is a disk for false twisting machines, there is a demand for a disk that is excellent in twisting ability to be brought into sliding contact with yarn to apply twists thereto, and is less likely to generate white powder (wear powder of the yarn) even when subjected to false twisting for a long time.

In order to meet such a demand, Patent Document 1 proposes a disk for false twisting machines in which at least a sliding contact surface with which yarn is brought into sliding contact is made from alumina ceramic, a mean particle diameter d of a surface of the sliding contact portion is $0.5 \leq d \leq 2.5$ μm, and a load length rate tp defined in JIS B 0601-1994 is tp $\leq$ 80% under a cutting level c = 40%.

CITATION LIST

PATENT LITERATURE

Patent Document 1: JP H9-256232 A

SUMMARY

A sliding member of the present disclosure is made of ceramics containing aluminum oxide as a main component and fluorine, including a surface portion having a sliding contact surface, and an inside surrounded by the surface portion, in which a concentration of fluorine on the sliding contact surface is higher than a concentration of fluorine in the inside as obtained from element mapping by an energy dispersive X-ray spectrometer.

The disk for false twisting machines of the present disclosure includes a sliding member.

A method for producing a sliding member of the present disclosure includes: grinding and/or polishing a surface of a ceramic sintered body containing aluminum oxide as a main component; immersing the ground and/or polished ceramic sintered body in an alkaline aqueous solution; and immersing the ceramic sintered body having been immersed in the alkaline aqueous solution in a solution containing at least any fluorine-containing compound selected from the group consisting of hydrogen fluoride, ammonium fluoride, ammonium bifluoride, and ammonium hydrogen fluoride to obtain a sliding member made of ceramics containing aluminum oxide as a main component and containing fluorine.

BRIEF DESCRIPTION OF THE DRAWINGS

FIG. 1 is a cross-sectional view illustrating a sliding member according to an embodiment of the present disclosure.
FIG. 2 is a perspective view illustrating an overview of a false twisting machine including a disk for false twisting machines.

DESCRIPTION OF EMBODIMENTS

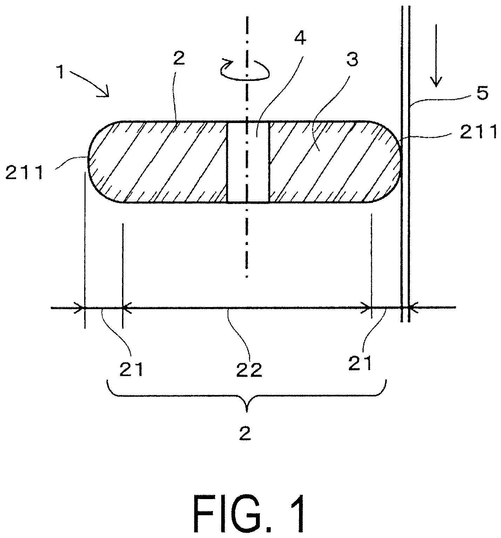

The sliding member according to an embodiment of the present disclosure will be described below. FIG. 1 is a cross-sectional view illustrating a sliding member 1 of the present embodiment. The sliding member 1 is used as a disk for false twisting machines.

A sliding member 1 of the present embodiment is made of ceramics containing aluminum oxide as a main component, containing fluorine, and including a surface portion 2 and an inside 3 surrounded by the surface portion 2 as illustrated in FIG. 1. The sliding member 1 has, for example, a round disk shape. A through hole 4 is formed in a center of the sliding member 1, and a rotation shaft is attached to this through hole 4 to rotate the sliding member 1.

The main component in the present embodiment refers to a component that accounts for equal to or greater than 80 mass% of 100 mass% in total of the components constituting the ceramics. The components constituting the ceramics can be identified by an X-ray diffractometer (XRD) using CuKα rays. The content of each component can be obtained by converting a metal element obtained by an X-ray fluorescence spectrometer (XRF) or an inductively coupled plasma (ICP) emission spectrophotometer into the identified component.

The surface portion 2 includes a sliding contact portion 21 and a non-sliding contact portion 22. The sliding contact portion 21 is positioned on the outer periphery of the sliding member 1, and includes a sliding contact surface 211 with which yarn 5 fed in a predetermined direction is brought into sliding contact. The sliding contact surface 211 refers to a surface with which the yarn 5 is brought into sliding contact, and may be the entire outer peripheral surface of the sliding contact portion 21.

The inside 3 of the sliding member 1 is a portion excluding the surface portion 2. The thickness of the surface portion 2 varies depending on the components of the grain boundary phase of the ceramics forming the sliding member 1, the content thereof, and the like, and may normally be equal to or greater than 1 μm and equal to or less than 50 μm, and may preferably be equal to or greater than 5 μm and equal to or less than 20 μm.

In the present disclosure, the concentration of fluorine on the sliding contact surface 211 of the sliding contact portion 21 is higher than the concentration of fluorine in the inside 3. Fluorine may be contained in at least the sliding contact portion 21, and the non-sliding contact portion 22 needs not contain fluorine or may contain less fluorine than that in the sliding contact portion 21.

Specifically, the fluorine concentration on the sliding contact surface 211 may be equal to or greater than 0.1 mass% and equal to or less than 1 mass%, and may preferably be equal to or greater than 0.2 mass% and equal to or less than 0.8 mass%. On the other hand, the fluorine concentration of the inside 3 may be equal to or less than 0.4 mass%, preferably be equal to or less than 0.1 mass%, with respect to the fluorine concentration on the sliding contact surface 211.

The concentration of fluorine can be obtained from element mapping by an energy dispersive X-ray spectrometer.

Specifically, the ratio of a predetermined element to the element of the main component is obtained by performing semi quantitative analysis approximated so that the total concentration is 100% by a peak intensity ZAF correction method of the elements detected in a predetermined analysis range (e.g., a range having a lateral length of 60 $\mu$m and a longitudinal length of 45 $\mu$m with the magnification of 2000 times) by an EDS-equipped electron scanning microscope (SEM/EDS). The acceleration voltage used in the element mapping is 15 kv.

A value A - B where a mean value B of equivalent circle diameters of a detection region of fluorine is subtracted from a mean value A of the distances between centroids of the detection regions of adjacent fluorine on the sliding contact surface 211 of the sliding contact portion 21 obtained by the element mapping may be equal to or less than 6 $\mu$m. That is, when the value A - B is equal to or less than 6 $\mu$m, the interval between adjacent fluorine is narrowed, and thus generation of wear powder can be further suppressed. The value A - B may be equal to or greater than 2 $\mu$m.

The equivalent circle diameter of the detection region of fluorine can be obtained using image analysis software. As the image analysis software, for example, Image-Pro by Hakuto Co., Ltd., WinROOF2021 by Mitani Corporation, A-Zou Kun (ver 2.52) by Asahi Kasei Engineering Corporation (registered trademark), and the like can be used. When "A-Zou Kun (ver 2.52)" is used as the image analysis software, the equivalent circle diameter of the detection region of fluorine can be measured as follows. With a target of an element mapping image (a range having a lateral length of 60 $\mu$m and a longitudinal length of 45 $\mu$m) obtained by the energy dispersive X-ray spectrometer, the equivalent circle diameter of the detection region of fluorine may be obtained by a technique called particle analysis. Setting conditions of this technique may include, for example, setting of a threshold that is an index indicating light-dark of an image to 20, lightness to bright, a small figure removal area to 0 $\mu$m$^2$, and a noise removal filter to be provided. This enables the detection region of fluorine and the region where fluorine is not detected to be distinguished by binarization, and the equivalent circle diameter of the detection region of fluorine is obtained by the technique called particle analysis.

Here, the binarized fluorine detection region and the region colored in blue, light blue, yellowish green, yellow, red, pink, white, or the like in the element mapping image of fluorine when the element mapping is performed substantially coincide with each other. In the above measurement, the threshold is 20, but the threshold may be adjusted according to the brightness of the element mapping. This threshold may be adjusted with the lightness of bright, the binarization method of manual, the small figure removal area of 0 $\mu$m$^2$, and the noise removal filter of being provided, and then the threshold may be adjusted so that the fluorine detection region of the element mapping image and the binarized fluorine detection region substantially coincide with each other.

The equivalent circle diameter of the detection region of fluorine obtained by the above-described method is, for example, equal to or greater than 0.2 $\mu$m and equal to or less than 3 $\mu$m. Hereinafter, the description of the image analysis software "A-Zou Kun" refers to the image analysis software produced by Asahi Kasei Engineering Corporation.

The distance between centroids of the detection regions of fluorine can be obtained by the following method. With a target of element mapping, the distance between centroids of the detection regions of fluorine may be obtained by a technique called a distance-between-centroids technique of dispersion measurement using image analysis software. The setting conditions of this technique may be the same as the setting conditions used to obtain the equivalent circle diameter of the detection region of fluorine.

In the present embodiment, it is preferable that a compound containing fluorine and calcium exists on the sliding contact surface 211. That is, on the sliding contact surface 211, a compound containing fluorine and calcium exists other than free carbon.

Examples of the compound containing fluorine and calcium include calcium fluoride whose composition formula is $CaF_2$ or $CaF_3$. The compound containing fluorine and calcium acts as a solid lubricant, and can reduce frictional force generated by sliding contact with a slid contact material (e.g., the yarn 5).

Such a compound containing fluorine and calcium may be mixed with aluminum oxide that is a main component at the time of producing the sliding member 1, but calcium carbonate used as a sintering additive forms a grain boundary phase as an oxide of calcium. When immersed in a solution containing a fluorine-containing compound, a part of calcium can move and aggregate to form the compound by being bonded with fluorine.

The existence of the compound containing fluorine and calcium on the sliding contact surface 211 can be confirmed, for example, for example, by an X-ray diffraction method or element mapping of fluorine and calcium by an energy dispersive X-ray spectrometer (EDS). When a region is present where the mapping image of fluorine and the mapping image of calcium overlap each other on the sliding contact surface 211 by the mapping by the EDS, a compound containing fluorine and calcium may be considered to exist in this region.

A mean value of skewnesses (Rsk) in a roughness curve of the sliding contact surface 211 may be equal to or less than 0. The skewness (Rsk) is a type of index indicating the surface property, and indicates the degree of deviation of concave/convex shapes formed on the surface. When the skewness (Rsk) is positive (i.e., Rsk > 0), the more Rsk increases, the steeper the convex portions and gentle concave portions in the roughness curve increase. On the other hand, when the skewness (Rsk) is negative (i.e., Rsk < 0), the more Rsk decreases, the steeper the concave portions and gentle convex portions in the roughness curve increase. In the present embodiment, since the mean value of the skewnesses (Rsk) is equal to or less than 0, the convex portion on the sliding contact surface 211 is rounded, and thus the risk of damaging the slid contact material (e.g., the yarn 5) is reduced. The mean value of the skewnesses (Rsk) may be equal to or greater than -0.8 and equal to or less than 0.

The skewness (Rsk) can be measured as follows. That is, the skewness (Rsk) can be measured from the roughness curve of the sliding contact surface 211 obtained using an ultra-depth color 3D shape measuring microscope (e.g., VK-X 1000 or its successor model produced by Keyence Corporation) in accordance with JIS B 0601:2001. The measurement conditions may be the illumination method of coaxial epi-illumination, the measurement magnification of 480 times, a cut-off value $\lambda$s of being omitted, a cut-off value $\lambda$c of 0.08 mm, correction of a termination effect to be present, and measurement ranges set at two places from the sliding contact surface 211 with the measurement target per one place being 710 $\mu$m $\times$ 533 $\mu$m. When the sliding member 1 has a round disk shape as a disk for false twisting machines, the sliding contact surfaces 211 radially facing each other may be set.

Then, four lines of the measurement target may be drawn in the long direction at substantially equal intervals in each measurement range, line roughness measurement may be performed, and the mean value of the skewnesses (Rsk) may be calculated. The length per line of the measurement target is, for example, 560 $\mu$m.

The mean value of mean square slopes (R$\Delta$q) in the roughness curve of the sliding contact surface 211 may be equal to or greater than 0.5 and equal to or less than 1.4.

The root mean square slope R$\Delta$q in the roughness curve is the root mean square of a local slope dZ/dx at a reference length l of the roughness curve, which is measured in accordance with JIS B 0601:2001, and is defined by the following equation.

[Equation 1]

$$R\Delta q = \sqrt{\frac{1}{\ell} \int_0^\ell \left( \frac{d}{dx} Z(x) \right)^2 dx}$$

The roughness curve is obtained as the same as or similarly to that described above.

When the numerical value of the root mean square slope (R$\Delta$q) is large, the concave/convex of the surface is steep, whereas when the numerical value of the root mean square slope (R$\Delta$q) is small, the concave/convex of the surface is gentle.

When the slid contact material is, for example, the yarn 5 and the mean value of the root mean square slopes (R$\Delta$q) is equal to or greater than 0.5, the sliding contact surface 211 can give the yarn 5 an appropriate frictional force, and thus a proper twist can be obtained.

On the other hand, when the mean value of the root mean square slopes (R$\Delta$q) is equal to or less than 1.4, the slope of the sliding contact surface 211 becomes gentle, and the risk of damaging the yarn 5 is reduced.

The measurement of the root mean square slope (R$\Delta$q) may be performed under the same measurement conditions as the measurement conditions used in the measurement of the skewness (Rsk).

The ceramics constituting the sliding member 1 may preferably have an aluminum oxide content of equal to or greater than 87 mass% and equal to or less than 91 mass%. The ceramics may contain fluorine, calcium, chromium, magnesium, silicon, and the like other than aluminum oxide.

When the content of the aluminum oxide is equal to or greater than 87 mass%, the area occupied by the grain boundary phase on the sliding contact surface 211 decreases, and inevitable impurities contained in the grain boundary phase also decrease, and thus wear resistance is improved. When the content of the aluminum oxide is equal to or greater than 87 mass%, the analysis accuracy of the fluorine concentration on the sliding contact surface 211 obtained from the element mapping by the energy dispersive X-ray spectrometer is improved. On the other hand, when the content of the aluminum oxide is equal to or less than 91 mass%, the area occupied by the grain boundary phase on the sliding contact surface 211 increases, and thus the contact angle with pure water decreases, and adhesion of dirt, particularly, dirt such as snow hardly containing moisture can be suppressed.

In the present embodiment, in particular, the ceramics may contain chromium, and the content of chromium in terms of oxide ($Cr_2O_3$) may be equal to or greater than 3 mass% and equal to or less than 5 mass%. When the content of chromium is in this range, the sliding contact surface 211 exhibits a reddish color tone such as a medium dark shade of pink-red, and thus even if wear powder (snow) or the like of the yarn 5 adheres to and accumulates on the sliding contact surface 211, it becomes easy to be distinguished and can be quickly removed.

The content of chromium in terms of oxide ($Cr_2O_3$) can be measured as follows. The content of Cr in the sliding member 1 is measured using an ICP emission spectrophotometer and converted into the content as $Cr_2O_3$.

The sliding contact surface 211 may preferably have a lightness index L* in the CIE 1976 L*a*b* color space of equal to or greater than 60 and equal to or less than 65, a psychometric chroma coordinate a* of equal to or greater than 16 and equal to or less than 19, and a psychometric chroma coordinate b* of equal to or greater than 0.1 and equal to or less than 2.

That is, since the sliding contact surface 211 exhibits a beautiful color tone called a medium light shade of pink-red, a demander can be given a luxurious feeling, an aesthetic satisfaction, and mental comfort over a long period of time.

The CIE 1976 L*a*b* color space is defined by JIS Z 8781-4:2013. The lightness index L*, the psychometric chroma coordinates a* and b* can be measured using a spectrophotometer (e.g., NF 777 or its successor model by Nippon Denshoku Industries Co., Ltd.). As the measurement conditions, the light source may be set to a CIE standard light source D 65, and the viewing angle may be set to 2°.

The relative density of the ceramics constituting the sliding member 1 may be equal to or greater than 95%. When the relative density is in the above range, the number of open pores is reduced, and thus even when the slid contact material comes into sliding contact, falling of particles from the periphery of the open pores positioned on the sliding contact surface 211 becomes less likely to occur. In particular, the relative density may be equal to or greater than 98%.

The relative density is expressed as a percentage (ratio) of the apparent density of the ceramics with respect to the theoretical density of the ceramics. The apparent density of the ceramics may be obtained in accordance with JIS R 1634:1998.

The method for producing the sliding member 1 of the present embodiment will be described below.

First, the surface of the ceramic sintered body containing aluminum oxide as a main component is ground and/or polished to form a predetermined disk shape (e.g., a round disk shape).

Next, the ceramic sintered body ground and/or polished into a disk shape is immersed in an alkaline aqueous solution as necessary. This is to facilitate a corrosive action by fluorine described later. The alkaline aqueous solution refers to, for example, an aqueous solution of an alkaline substance such as NaOH, KOH, or $NH_3$. The concentration of the alkaline substance may be equal to or greater than 20 mass% and equal to or less than 50 mass%. Immersion may be performed, for example, in an aqueous solution having a temperature of equal to or greater than 20°C and equal to or less than 80°C within a time range of equal to or greater than 30 minutes and 72 hours.

The ceramic sintered body is drawn up from the alkaline aqueous solution, washed with water, dried, and then immersed in a solution containing a fluorine-containing compound. This can give the sliding member made of ceramics containing aluminum oxide as a main component and containing fluorine.

The fluorine-containing compound is at least one selected from the group consisting of hydrogen fluoride, ammonium fluoride, ammonium bifluoride, and ammonium hydrogen fluoride.

Thus, by immersing the ceramic sintered body in a solution containing a predetermined fluorine-containing compound, the surface of the ceramic sintered body is subjected to a corrosive action by fluorine to form a rough surface having an appropriate surface roughness, and thus an appropriate frictional force (e.g., an appropriate twisting force) for the slid contact material can be obtained. Generation of friction powder from the slid contact material can be reduced, and damage to the slid contact material is suppressed.

The concentration of the fluorine-containing compound in the solution containing the fluorine-containing compound may be equal to or greater than 0.5 mass% and equal to or less than 5 mass%. The concentration of the fluorine-containing compound may particularly be equal to or greater than 0.7 mass% and equal to or less than 1.5 mass%. Immersion is preferably performed, for example, in an aqueous solution having a temperature of equal to or greater than 15°C and equal to or less than 80°C within a time range of equal to or greater than 30 minutes and 72 hours in order to enhance the corrosive action by fluorine. The immersion time may particularly be equal to or greater than 30 minutes and equal to or less than 24 hours.

As described above, the sliding member 1 of the present embodiment has high wear resistance due to the high concentration of fluorine on the sliding contact surface 211 and can be used for a long period of time, and furthermore, the attacking property (frictional force) of the sliding contact surface with respect to the slid contact material is reduced, and thus wear powder generated from the slid contact material is suppressed.

In the inside 3 of the sliding member 1, even when a situation where a large temperature difference is generated between the surface portion 2 and the inside 3 due to exposure to a high temperature is repeated due to a low concentration of fluorine that increases thermal expansion, stress generated by repetition of thermal expansion and contraction at the inside of the sliding member is reduced, and cracks are less likely to occur.

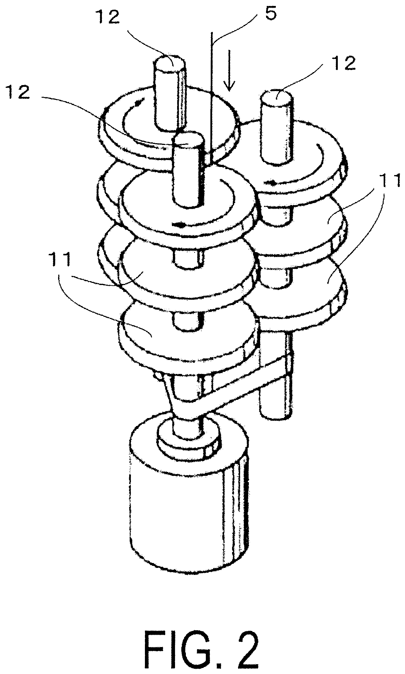

The disk for false twisting machines including the sliding member 1 will be described with reference to FIG. 2. The disk for false twisting machines is used in a false twisting device of a stretching false twisting machine. To twist the yarn 5, a plurality of rotating disks 11 for false twisting machines and the yarn 5 are brought into contact with each other. As illustrated in FIG. 2, a plurality of units in which the plurality of disks 11 for false twisting machines are attached to a rotation shaft 12 are prepared (three units are used in FIG. 2). In plan view in the axial direction of the rotation shaft 12, the disks 11 for false twisting machines of each unit partially overlap the disks 11 for false twisting machines of the adjacent unit. The rotation shafts 12 of each of the units are provided in parallel, and the disks 11 for false twisting machines are not in contact with each other and are also not in contact with the rotation shafts 12 of the adjacent units. In this state, when the rotation shaft 12 is rotated at a high speed to cause the yarn 5 to travel between those units at a high speed, the yarn 5 is brought into contact with the outer peripheral surface (i.e., the sliding contact surface 211 of the sliding member 1) of the disks 11 for false twisting machines of each unit, rotated, subjected to false twisting, and extended.

Since the outer peripheral surface (the sliding contact surface 211) of the rotating disk 11 for false twisting machines is in direct contact with the yarn 5, the outer peripheral surface is easily worn. However, the sliding member 1 according to the present embodiment is excellent in wear resistance, and thus can be used for a long period of time. Since the sliding member 1 according to the present embodiment has an appropriate frictional force, the twisting property is excellent, and can suppress wear powder (the above-described snow) from being generated due to wear of the yarn 5.

The sliding member of the present disclosure is not limited to the application as the disk 11 for false twisting machines, and can also be used as sliding members for, for example, seals, slide rings, pumps, pistons, and the like.

While the embodiment of the present disclosure has been described above, the present disclosure is not limited to the above embodiment, and various changes and improvements can be made within the scope of the present disclosure.

REFERENCE SIGNS

1 Sliding member
2 Surface portion
21 Sliding contact portion
211 Sliding contact surface
3 Inside
4 Through hole
5 Yarn
11 Disk for false twisting machine
12 Rotation shaft

**Claims**

1. A sliding member made of ceramics containing aluminum oxide as a main component and fluorine, the sliding member comprising:

   a surface portion having a sliding contact surface; and
   an inside surrounded by the surface portion, wherein
   a concentration of fluorine on the sliding contact surface is higher than a concentration of fluorine in the inside as obtained from element mapping by an energy dispersive X-ray spectrometer.

2. The sliding member according to claim 1, wherein a value obtained by subtracting a mean value of equivalent circle diameters of detection regions of fluorine from a mean value of distances between centroids of the detection regions of adjacent fluorine on the sliding contact surface obtained by the element mapping is equal to or less than 6 $\mu$m.

3. The sliding member according to claim 1 or 2, wherein a compound containing fluorine and calcium exists on the sliding contact surface.

4. The sliding member according to any of claims 1 to 3, wherein a mean value of skewnesses (Rsk) in a roughness curve of the sliding contact surface is equal to or less than 0.

5. The sliding member according to any of claims 1 to 4, wherein a mean value of root mean square slopes (R$\Delta$q) in a roughness curve of the sliding contact surface is equal to or greater than 0.5 and equal to or less than 1.4.

6. The sliding member according to any of claims 1 to 5, wherein the ceramics has an aluminum oxide content of equal to or greater than 87 mass% and equal to or less than 91 mass%.

7. The sliding member according to any of claims 1 to 6, wherein the ceramics contains chromium, and a content in terms of $Cr_2O_3$ is equal to or greater than 3 mass% and equal to or less than 5 mass%.

8. The sliding member according to any of claims 1 to 7, wherein the sliding contact surface has a lightness index L* in a CIE 1976 L*a*b* color space of equal to or greater than 60 and equal to or less than 65, a psychometric chroma coordinate a* of equal to or greater than 16 and equal to or less than 19, and a psychometric chroma coordinate b* of equal to or greater than 0.1 and equal to or less than 2.

9.  A disk for false twisting machines comprising:
    the sliding member according to any of claims 1 to 8.

10. A method for producing the sliding member according to any of claims 1 to 8 comprising:

    grinding and/or polishing a surface of a ceramic sintered body containing aluminum oxide as a main component; and
    immersing the ground and/or polished ceramic sintered body in a solution containing at least any fluorine-containing compound selected from the group consisting of hydrogen fluoride, ammonium fluoride, ammonium bifluoride, and ammonium hydrogen fluoride.

11. The method for producing the sliding member according to claim 10 comprising:
    immersing the ground and/or polished ceramic sintered body in an alkaline aqueous solution before immersing the ground and/or polished ceramic sintered body in a solution containing the fluorine-containing compound.

FIG. 1

FIG. 2

**INTERNATIONAL SEARCH REPORT**

| International application No. |
| --- |
| **PCT/JP2022/032838** |

**A.    CLASSIFICATION OF SUBJECT MATTER**

*D02G 1/08*(2006.01)i; *C04B 41/85*(2006.01)i; *C04B 35/117*(2006.01)i
FI:    C04B41/85 A; C04B35/117; D02G1/08 Z

According to International Patent Classification (IPC) or to both national classification and IPC

**B.    FIELDS SEARCHED**

Minimum documentation searched (classification system followed by classification symbols)

D02G1/08; C04B35/00-C04B35/84 ;C04B41/80-41/91

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-115268 A (KYOCERA CORPORATION) 29 June 2017 (2017-06-29) | 1-11 |
| A | JP 1-502426 A (OLAJIPARI FOVALLALKOZO ES TERVEZO VALLALAT) 24 August 1989 (1989-08-24) | 1-11 |
| A | CN 106365661 A (LANZHOU INSTITUTE OF CHEMICAL PHYSICS, CHINESE ACADEMY OF SCIENCES) 01 February 2017 (2017-02-01) | 1-11 |
| A | JP 2000-185986 A (NISSAN MOTOR COMPANY, LIMITED) 04 July 2000 (2000-07-04) | 1-11 |
| A | JP 53-96010 A (YOSHIDA, Minoru) 22 August 1978 (1978-08-22) | 1-11 |
| A | JP 2000-355754 A (NGK INSULATORS, LIMITED) 26 December 2000 (2000-12-26) | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 October 2022** | **01 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/032838**

| Patent document<br>cited in search report | | | Publication date<br>(day/month/year) | Patent family member(s) | | | Publication date<br>(day/month/year) |
|---|---|---|---|---|---|---|---|
| JP | 2017-115268 | A | 29 June 2017 | (Family: none) | | | |
| JP | 1-502426 | A | 24 August 1989 | WO | 1988/006575 | A1 | |
| CN | 106365661 | A | 01 February 2017 | (Family: none) | | | |
| JP | 2000-185986 | A | 04 July 2000 | (Family: none) | | | |
| JP | 53-96010 | A | 22 August 1978 | (Family: none) | | | |
| JP | 2000-355754 | A | 26 December 2000 | (Family: none) | | | |

Form PCT/ISA/210 (patent family annex) (January 2015)

**EP 4 397 796 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9256232 A